# EUROPEAN PATENT APPLICATION

(11) **EP 1 839 488 A1**
(43) Date of publication of application: **03.10.2007**
(21) Application number: 06111758.6
(22) Date of filing: 27.03.2006
(51) Int. Cl.: A21D 2/26, A21D 10/04, A21D 13/08

(54) **Egg-free cake and a method for preparation thereof**

(71) Applicant: Campina Nederland Holding B.V., 5301 LB Zaltbommel (NL)
(72) Inventor: Kloek, William, 5467 BR, Veghel (NL); Dijkgraaf, Jeroen Theodorus Maria, 5463 BP, Veghel (NL); Peters, Mirriam Maria Johanna Petronella, 57563 PA, Milheeze (NL)
(74) Representative: van Westenbrugge, Andries

(57) **Abstract**

The invention relates to a substantially egg-free bakery product and batter mix formulation suitable for the preparation thereof, comprising non-egg heat-coagulated and heat-coagulatable globular proteins, respectively, and wherein the sugar content comprises 25 - 90 wt% lactose, and wherein the sugar content preferably comprises 50 - 90 wt% of lactose and dextrose. With high amounts of lactose, preferably in combination with lesser amounts of dextrose, it is now possible to prepare an egg-free bakery product which resembles its egg-containing counterpart in terms of taste, mouthfeel, tenderness, stickiness and structure. The bakery product is preferably a sponge cake. Advantageously, the method for preparing such a cake may involve lower baking temperatures compared to the egg-sponge cakes.

## Description

### FIELD OF THE INVENTION

The invention pertains to a substantially egg-free bakery product, in particular an egg-free foamed cake, and to the preparation thereof. The invention also pertains to a batter mix formulation suitable for preparing such a bakery product.

### BACKGROUND OF THE INVENTION

Egg is a versatile food and food component. An important use of eggs is in the preparation of bakery products, where they serve important functional properties and have an improving effect on product quality. Functions of egg and egg yolk which are important in cake batter and cake product include: emulsifying capacity; leavening action; protein gelation to maintain cake volume and air cell structure; tenderising and moisturising effect to maintain freshness; provide protein nutrition and overall improvement in eating quality. In particular the preparation of cakes and muffins depends heavily on the functional and organoleptic contribution from eggs.

However, there are also many drawbacks related to the use of eggs in such a recipe. First of all, the cholesterol content of eggs causes concern. In addition, there are health issues regarding its saturated fatty acid content, the risk of Salmonella contamination and the availability of bird products in view of a possible outbreak of bird flu. The limited shelf life, high costs and volatile pricing also make egg a less favoured food ingredient in bakery products. If these are not satisfactory reasons to avoid eggs in a baking recipe, some people refuse to eat eggs because of religion or based on strict vegetarian principles.

To address such issues many compositions have been proposed to replace a large part, if not all of the eggs. Therein, the focus has been on replacing at least the structure-providing part of the egg, the egg proteins. Because of the similarity of egg albumen and whey proteins, a logical extension is to utilise whey proteins as a substitute in baked goods. Whey protein ingredients have the distinct advantage to allow processors to use an all-dairy food ingredient label, as well as giving a cost-effective alternative to egg whites.

However, the replacement has not always been satisfactory. US 4,360,537 and GB-2.010.066 report that such egg (yolk) replacers based on whey protein concentrates lack the desired functional and organoleptic properties for use in cake products and the like. US 4,360,537 even provides cake tests for a sponge cake showing that these commercially available egg (yolk) replacers result in cakes having varying degrees of unacceptably low volume, coarse texture, non-uniform cell structure, weak texture and unacceptable flavour. GB-2.010.066 mentions that only small amounts of egg albumen, i.e. up to 25 % may be replaced by the whey protein concentrate, and still obtain an acceptable cake. Full egg replacement is believed to be impossible. Instead, GB-2.010.066 proposes up to 75 % egg protein replacement by a newly prepared whey protein concentrate. Therein, it is essential to avoid increasing the lactose content over 10% of that originally present in the formulation.

In the field of egg-containing bakery products, it is known from US 4,233,330 to replace 10 - 35 % of the sugars in cake formulas, usually sucrose or dextrose (corn sugar), of standard dough formulations for egg-containing bakery products with lactose to improve shelf-life of the ultimate cake product, which is related to the tenderness or "freshness" of the baked product. US 4,233,330 teaches an optimum of about 2 - 7 wt% and a maximum of about 11 wt% lactose in the total cake mix. Within this range substantially increased volumes and external appearance are obtained. It is believed that higher amounts of lactose would disadvantageously result in depressing of cake volume of the egg-containing cake again. In fact, the disclosed lactose concentrations are far lower than the maximum of 11 wt%.

Hence, there is a need for a reduced-egg bakery product having a visual appearance and taste perception, especially in terms of cake volume, texture, tenderness, stickiness and mouthfeel, indifferent from traditionally prepared egg-containing cakes. There is especially a need for an egg replacement which could realise these effects by replacing the eggs in the recipe as a whole, thus resulting in an completely egg-free bakery product.

### DESCRIPTION OF THE INVENTION

It is an object of the invention to provide a substantially egg-free baked food product, which in terms of volume, texture and mouthfeel is similar to its egg-containing counterparts. Therein, it is not considered sufficient to replace only the egg protein part of the composition, because the egg yolk part also contributes to the stability of the cake mix and the texture and volume of the ultimate bakery product.

It is now found that this object can be achieved by replacing the eggs by heat-coagulatable globular proteins from a source other than eggs, in combination with high amounts of lactose, significantly higher than those levels reported in the art in relation to an improvement of shelf-life of a bakery product. The heat-coagulatable proteins support the whipping agent during batter preparation and provide structure fixation and texture during the actual baking process, and lactose in large amounts further aids to the texture and volume of the product. Either the heat-coagulatable proteins or high amounts of lactose on its own does not result in a product with acceptable properties. In addition, the mixture of these heat-coagulatable proteins and lactose enables the skilled person to bake a cake at significantly lower heating temperatures without extending the baking time, thus advantageously reducing energy costs. It is also found that lactose has a positive effect of the egg replacement composition of the invention, and that a combination of dextrose and lactose further optimises the bakery product in terms of texture, taste and stickiness.

When making a reduced-egg bakery product, a skilled person, faced with the problem of obtaining cake volume, texture and mouthfeel which resemble that of its egg protein-containing counterpart, would never contemplate to incorporate lactose in the product, let alone in high concentrations, as this has never been associated in the art with improvement of these cake properties. In fact, literature suggesting a positive effect related to the use of lactose, teach that these effects are only obtained at relatively low lactose concentrations. Moreover, these documents relate to egg-containing bakery products. Even if the skilled person would consider adding lactose to a reduced-egg cake mix, for instance for achieving a certain degree of freshness to the ultimate product, the amounts thereof would be far too low to obtain a beneficial effect on cake volume, texture and mouthfeel.

The present invention relates to a substantially egg-free batter mix formulation suitable for preparing a bakery product, wherein the formulation comprises non-egg heat-coagulatable globular proteins and has a sugar content comprising 25 - 90 wt% lactose. The present invention also relates to a substantially egg-free bakery product which can be obtained therefrom, comprising non-egg heat-coagulated globular proteins and a sugar content comprising 25 - 90 wt% lactose.

The present invention also pertains to a method for preparing a substantially egg-free batter mix formulation and bakery product using a standardised industrial recipe comprising at least flour, baking powder, sugar, water, egg ingredients or ingredients associated with egg, and optionally fat, wherein at least part of the egg ingredients or ingredients associated with egg is replaced by heat-coagulatable globular proteins other than egg proteins, and wherein lactose replaces 25 - 90 wt% of the sugar content.

The invention further relates to a method for preparing the substantially egg-free batter mix formulation of the invention, comprising mixing flour, baking powder, sugar, water, heat-coagulatable globular proteins other than egg proteins, wherein said sugar comprises 25 - 90 wt% lactose. Preferably, less than 10 % egg ingredients or ingredients associated with egg are present in the mixture.

The term "substantially egg-free" is intended to mean that the batter mix formulation and bakery product are a reduced-egg batter mix formulation and bakery product having less than 1 wt%, preferably even less than 0.5 wt%, most preferably less than 0.1 wt% egg ingredients or ingredients associated with egg, among which egg proteins, such as ovalbumin, and egg phospholipids, based on the solid content of the batter mix formulation and bakery product. Most preferably, the bakery product is certified as "egg-free", i.e. completely free of egg ingredients or ingredients associated with egg, whereas it would normally comprise any egg material.

In the context of the method of preparing the batter mix formulation and the bakery product, with the words "at least part of the egg ingredients or ingredients associated with egg is replaced" is understood an egg replacement of at least 90 wt%, more preferably at least 95 wt%, most preferably at least 99 wt%, calculated on the amount of egg solids normally present according to the standardised industrial recipe. More in particular, the egg replacement during preparation of the bakery product is 100%.

Throughout the application, the weight percentages are based on the total solid weight of the cake mix formulation or batter mix, unless specified otherwise. The batter mix refers to the unbaked, unrisen mixture of ingredients. Because the loss of solids during the baking process is limited, these numbers correspond to the values in the baked product. However, if numbers are specified on the total weight of the batter mix, the actual values in the baked end-product should be corrected for the changes in the liquid content. Roughly speaking, about one-sixth of the weight of the batter mix is reduced during baking.

The present invention may generally be applied to bakery food applications where egg ingredients are present, including cakes, donuts, muffins. It is preferred that the substantially egg-free bakery application is a cake product. Cakes are generally prepared from water, eggs and a mixture of the ingredients sugar, fat (including edible oils and mixtures of fats and/or edible oils), flour and baking powder; if sugar, fat, flour and eggs are used in equal quantities by weight, a cake of this type is also known as a "four-quarters cake" and as a pound cake. Various other cake types are available and standardised cake formulas are established for all these types, similar to the foregoing formulation. There are certain basic rules concerning the relationship of ingredients to each other (formula balance), and the invention provides little reason to deviate from these standardised ratios of sugar, fat and flour known in the art. Therefore, the concept of the invention may in principle be applied to any of the recipes for cake using fat, sugar, flour and eggs, thereby replacing the eggs and materials associated therewith.

In these standardised formulations, "sugar" is widely used in the sense of sucrose, as derived principally from sugar cane and sugar beets, sugar maple, sorghum and the like, or dextrose (corn sugar). If present, glucose, galactose and maltose also add to the sugar content. Starch or starch-like components, and other glucose-polymers or gluco-oligosaccharides, such as maltodextrins, if present, do not contribute to the sugar content either. If present, the monosaccharide fructose does not contribute to the sugar content of the formulation. The term "liquid" is intended to the liquid ingredients, including water and/or milk, eggs, the water content of liquid sugars and the like.

In a most preferred use the cake product is a foamed cake, which is a cake product low in fat, sponge cake, angel food cake and chiffon cake being important examples thereof. Strictly speaking, a foamed cake contains no fat other than provided by the eggs. A foamed cake preferably has less than 10 wt%, preferably 1-5 wt% of fat, based on its total solid content. As foamed cakes have a large proportion of egg ingredients, the effect of egg replacement on cake volume is therefore of great importance to the appreciation of this type of product.

Most preferably, the cake product is a sponge cake, characterised as being low-fat, soft and aerated. A standardised industrial recipe for foamed cake products, including sponge cake, contains about 30 - 50 wt% of whole egg and about 20 - 40 wt% of sugars, in terms of the total weight of all ingredients in the formulation. A more detailed industrially applied recipe is given in the examples.

At least a substantial part, more preferably all of the egg proteins listed in a standard baking recipe is now replaced by similar amounts of heat-coagulatable globular proteins, soy protein and whey protein being the most important examples thereof It is preferred therein to replace the egg proteins by other heat-coagulatable globular proteins in a weight ratio in the range of 1:1 - 1:2, i.e. the amount of other heat-coagulatable globular proteins is between once and twice the corresponding amount of egg proteins. For instance, if a standard recipe for cake mentions about 30 wt% whole egg, the egg-free equivalent would require about 4-6 wt% alternative heat-coagulatable globular proteins (whole egg comprises about 25 % solids, about half of which consists of proteins, wherein more than 70 % of the proteins are globular proteins capable of heat-induced gelation). Similarly, a skilled person will be able to calculate the amount of globular proteins necessary to replace their egg protein counterpart in any bakery product, starting from the egg-containing recipe. Commercially available low cost soy protein sources are mentioned in US 4,360,537.

Where it is read "heat-coagulatable", it refers to the untreated globular proteins in the batter mix formulation, prior to heat treatment. Thereafter, in the bakery product, these same globular proteins are referred to as "heat-coagulated".

Whey proteins have proven to be very suitable globular heat-coagulatable proteins. Whey proteins are generally known in the specialist field and are commercially available. In a preferred embodiment whey protein isolate (WPI) or whey protein concentrate (WPC) is applied as the egg protein replacement in cake and the like. WPC is derived from whey by removing sufficient non-protein constituents, such as lactose and minerals. Various techniques may be applied to obtain the protein-rich fraction of whey, including electrodialysis and gel filtration. Nowadays, ultrafiltration, as for instance described in WO-A-04/091306, is the most preferred method, and typically produces ingredients that range in protein content from 34% to 80%. WPC can be prepared from sweet as well as acidified whey. Especially WPC having a high protein content, for example 60 wt% or higher, preferably more than 80 wt% or higher is preferred; these WPCs are respectively designated WPC60 and WPC80 in the field. It is also possible to use WPC35, for example. The WPC is substantially non heat-denaturated, otherwise it could not sufficiently act as a gelling agent during the baking process.

WPI contains 90% or more protein, and can be obtained from commercial-scale fractionation of cheese whey by various processes, including ion-exchange processing using cationic and/or anionic resins selected for the intended functionality of the isolate (Pearce, R.J. "Whey protein recovery and whey protein fractionation", in Whey and Lactose Processing, J.G. Zadow, Ed., Elsevier, London (1992) 271-316). Such an isolation process is for instance described in US 4,154,675 and US 4,218,490. A good WPI candidate is BiPRO^{™} from Davisco Foods International (LeSueur, Minn.).

WPC and WPI still contain lactose, vitamins, minerals, and some fat, which help them function in gel structure, water binding, browning, and aeration. In practice, a large part of the low molecular weight compounds such as lactose, minerals, non-protein nitrogen and vitamins are filtered from the whey to the permeate, and the proteins are concentrated in the retentate. If for instance WPC35 is applied, it contains approximately 50 % lactose. The lactose content of a commercially available WPI or WPC80 is typically less than 6 wt% of its total weight, wherein the amount of lactose decreases as the whey protein level increases. The lactose present in the whey protein concentrate or isolate adds to the total lactose content of the bakery application.

If the standardised industrial recipe for the bakery product mentions whole egg as a source of globular heat-coagulatable proteins, it inherently adds to the liquid content of the formulation. Consequently, if these egg materials are replaced by other globular heat-coagulatable proteins, the loss of liquid should be accounted for. A skilled person can easily recalculate the additional amount of liquid required to do so.

In summary, the substantially egg-free batter mix formulation and bakery product contain about 1 - 20 wt%, more preferably 2 - 12 wt%, more preferably 3 - 10 wt% of heat-coagulatable and heat-coagulated proteins, respectively, preferably whey proteins. The bakery product further contains customary proportions of flour, fat, liquid (water, milk) and leavening, in accordance with standardised formulations for that particular bakery product. Normally, flour is present in amounts of at least 10 wt% and the leavening (baking powder) content is about 1 wt%.

Lactose, both present in the whey protein ingredient as well as specifically added, attributes to the sugar content of the bakery product. In order to maintain the desired ratio of sugar to other ingredients, lactose is being added at the cost of customary sugars. Lactose replaces 25 - 90 %, more preferably 30 - 85 %, in particular more than 40 % of the sugar content in the standard formulation. The replacement is calculated with respect to the weight of the sugar compounds. Higher levels of lactose should be avoided, as it would be at the cost of the desired sweetness of the bakery product.

It is observed by applicant that especially taste may be further improved by using high amounts of dextrose. Therefore, it is preferred that, within the general concept of lactose replacing part of the sugar content, the combination of lactose and dextrose replaces 50 - 90 wt%, more preferably 60 - 85 wt% of the sugar content. The batter mix formulation and bakery product of the present invention thus preferably contain lactose and dextrose in an amount of 50- 90 wt%, more preferably 60- 85 wt% of its sugar content. Especially in those cases where lower amounts of lactose are present, the lack of lactose may be partly compensated by the inclusion of dextrose. However, in all cases at least significant amounts of lactose should be present. The batter mix formulation and bakery product preferably have a weight ratio of lactose:dextrose of at least 1:1, more preferably at least 1.5:1. The term "replacement" is intended to comprise dextrose already present in the standardised recipe, thus possibly replacing dextrose itself. The bakery product preferably contains 10-50 wt%, more preferably 15-40 wt% sucrose of the total sugar content.

In a foamed cake product containing approximately 40 wt% sugars, based on its solid content, the amount of lactose contributing to the sugar content should be about 10 - 36 wt%, more preferably 12 - 34 wt%, most preferably more than 16 wt%. More preferably, the bakery product contains 20 - 36 wt%, even more preferably 24 - 34 wt% of lactose and dextrose together. The remaining part of the sugars present in the bakery product is preferably formed from sucrose, the "normal" sugar in bakery recipes.

In a preferred embodiment, the ratio of lactose and dextrose to sucrose is between 1:1- 9:1, and more preferably the ratio of lactose:sucrose is between 3:1 - 9:1, preferably 7:3- 17:3, in particular more than 4:1.

The replacement may occur at the time of preparing the batter mix formulation, at the condition that the lactose is provided in its dissolved form to the batter mix formulation. Therein, it is preferred that at least 90 wt%, more preferably all of the added lactose is supplied as a lactose solution. As lactose may also be present in other ingredients, such as WPC or WPI, it is preferred that at least 60 wt%, more preferably at least 70 wt% of the total amount of lactose is added as a lactose solution. Lactose is known to dissolve poorly in water, and during the actual cake mix preparation time and temperature may be of value insufficient to achieve complete dissolution. However, it is found that lactose only contributes if thoroughly mixed with the other components. Therefore, if lactose is supplied in a dried form, it is preferred to pre-dissolve the lactose in water at an elevated temperature, for instance about 65 - 85 °C, before adding it to one or more of the other ingredients of the batter formulation. Most preferably, the lactose solution is first cooled down before further mixing. If dextrose is applied, it may be incorporated in the lactose solution. However, it is not deemed necessary, as dextrose is not bothered by a low water solubility in water as lactose is.

It is further found that the batter mix formulation may be further supplemented with phospholipids from another source than egg lecithin, for instance milk phospholipids, in order to compensate for the loss of egg phospholipids in the substantially egg-free bakery product. The phospholipids advantageously contribute to the tenderness and taste of the bakery product. They further aid in reducing the effect of dehydration after preparation. Preferably, the bakery product and batter mix formulation further comprise 0.05- 0.3 wt% of non-egg phospholipids, calculated in terms of the solid content. While lecithins obtained from all kinds of sources other than egg can be applied as the source of non-egg phospholipids, the least expensive and most readily available lecithin is soy lecithin. However, in a preferred embodiment the batter mix formulation and the final bakery product contains phospholipids derived from milk. Whereas egg phospholipids mainly comprise phosphatidylethanolamine (PE) and especially phosphatidylcholine (PC), the use of milk phospholipids can be traced by the presence of considerate amounts of phosphatidylserine (PS). Good results are achieved using SM2 powder, available from Corman (Goé, Belgium). It further comprises sphingomyelin, which is normally not present in an egg phospholipids fraction. In order to mask the loss of egg phospholipids in the substantially egg-free bakery product, it is preferred to include about 1 - 3 wt% of SM2 powder to the batter mix formulation, based on its total weight.

The batter mix formulation and bakery product derived therefrom may further comprise hydrocolloids, such as hydroxypropylmethylcellulose (HPMC), to increase the firmness of the product. These hydrocolloids may be present in an amount of 1- 3 wt%.

Surprisingly, it is observed that the combination of non-egg phospholids and hydrocolloids, preferably HPMC, improve the structure, taste and overall liking of the product, more than the sum of the individual components. This synergistic effect is demonstrated in the accompanying examples for a combination of SM2 powder and Methocel K99 (Brenntag, Loosdrecht, The Netherlands). Thereto, the different components may be added to the batter mix formulation in the aforementioned amounts. In a preferred embodiment the batter mix formulation and bakery product thus contain milk phospholipids and hydroxypropylmethylcellulose.

Egg-free flavourants and/or colourants may be added to the batter mix formulation to improve taste and overall liking, for instance an egg flavour. There is little reason to change other ingredients and/or amounts thereof in the batter mix formulation and the bakery product in view of their egg-containing counterparts. The preparation of the substantially egg-free batter mix formulation and of the substantially egg-free bakery product are practically indifferent from the preparation methods for obtaining their egg-containing counterparts, except that the formulation of the invention enables the baking process of the substantially egg-free bakery product to be performed at much lower baking temperatures.

If the standardised industrial recipe is a recipe for sponge cake, it is now possible with the new formulation to perform the baking process at a temperature of only 140 - 160°C, more preferably about 150°C, whereas in the art a baking temperature of 175 - 190 °C is required (see for instance GB 2,010,066). Therefore, in addition to the aforementioned advantages the new formulation adds to the baking product, it also beneficially reduces the energy costs related to the preparation of the baking product. Therein, the baking time does not need to be extended in order to obtain an acceptable product.

The baking process at these lower temperatures yields a bakery product which closely resembles its egg-containing counterpart in terms of mouthfeel and cake volume. The specific volume (litre) is a parameter which returns in many patent applications concerning cake characterisation. Each cake type requires a certain degree of specific volume. If the bakery product is a sponge cake, a specific volume of about 2.0 litre per 400 gr batter is regarded as being the standard. From sensory panel tests it is concluded that the specific volume should be at least the standard value, in order for the product to be appreciated as an acceptable alternative to the egg-containing counterpart. However, apart therefrom, the specific volume in itself cannot be regarded as the sole factor in determining the acceptance level of the cake, as also demonstrated in the accompanying examples.

### EXAMPLES

### Example 1 - Comparison egg-free sponge cake and its egg containing counterpart

An egg cake and egg-free cake were made according to the recipes mentioned in Table 1, using the following ingredients: Emulsifier-based whipping agent BV45 (DMV International Veghel NL), wheat flour Albatros (Meneba-Rotterdam NL), wheat Starch Puramyl SP (Latenstein-Nijmegen NL), sucrose (Suikerunie-Dinteloord NL), baking powder (Karam Leeuwarden NL).

Whole egg (mixed separately Hobart speed 1 for 25 sec) or its replacer WPI (Davisco Foods La Sueur MN, USA) were mixed with the indicated amount of water using a Hobart N50 equipped with a wire wisk, and then with the appropriate ingredients on speed 1 for 30 sec. Subsequently the speed was increased to 3 for 7 min.; 400 gr. batter was transferred into greased tins (diameter 26 cm). The tin was placed in a preheated oven (Euro oven Probat, Duiven NL). The cake was left in the oven for 30 min. The oven temperature of the egg cake, egg-free cake was respectively 180°C and 150°C. Afterwards the cakes were cooled down on a wire grid at room temperature for 45 min. Then the cakes were wrapped up in plastic to avoid contact with the surroundings.

After cooling a sensory evaluation was carried out on a scale of 1-5, wherein "1" is the lowest and "5" the highest score. In the evaluation "spongy" relates also to mouthfeel, "structure crumb" to gas bubble distribution and "tenderness" to freshness.

The figures indicate that the egg-free cake scored modest comparing to the egg cake with respect to spongy/mouthfeel, structure crumb, tenderness, taste and overall liking. Furthermore, the egg-free cake showed an unacceptable sticky crust. The crust aspect was not included in the overall liking.

The specific volume was measured according to a well know method in the bakery industry, which means the use of a shape with a well defined volume and application of rape seeds. As is shown in Table 1 the specific volume of the egg-free cake was slightly below the egg cake. However, the figure of 2.08 litre was still above the commercial standard of 2.0 litre.

For the measurement of firmness and springiness the crust of the sponge cake was removed. The figures mentioned are an average of three samples from the middle of the cake (sample size was 40 x 40 x 29 mm (h)). Use was made of a Texture Analyzer TA-XT2 (Stable MicroSystems Ltd. Goldalming UK) with following settings:
- "measure force in compression";
- body geometry 25 mm diameter, 35 mm high plastic cylinder (P25);
- test speed 1 mm/sec, pre-test speed 1 mm/sec, post-test speed 10 mm/s;
- penetration distance 7.71 mm, time 60 s;
- sample at room temperature;
- return distance & auto height 31 mm.

**Table 1**

| RECIPE (GR) | | Egg cake | Egg-free cake |
|---|---|---|---|
| Whipping agent - BV45 | | 30 | 30 |
| Wheat flour - Albatross | | 160 | 162 |
| Wheat starch - Puramyl SP | | 62 | 60 |
| Sucrose | | 230 | 230 |
| Water | | 130 | 360 |
| Whey protein - Bipro | | - | 46 |
| Whole egg | | 275 | - |
| Baking powder - Karam | | 8 | 8 |

| MEASUREMENTS | | | |
|---|---|---|---|
| Firmness - ) | day 1 (gr | 63 | 60 |
| | day 2 | 74 | 69 |
| | day 3 | 99 | 81 |
| Springiness- | day 1 (%) | 51 | 52 |
| | day 2 | 55 | 57 |
| | day 3 | 52 | 57 |

| SENSORY EVALUATION* | | | |
|---|---|---|---|
| Spongy/mouthfeel | | 5 | 3 |
| Structure crumb | | 5 | 2 |
| Tenderness | | 5 | 2 |
| Taste | | 5 | 2 |
| Overall liking | | 5 | 3 |
| STICKINESS CRUST | | 1 | 5 |
| SPECIFIC VOLUME PER 400 GR BATTER (LITRE) | | 2.25 | 2.08 |

| | | | |
|---|---|---|---|
| * a scale of 1-5, upon 1 is the lowest and 5 the highest score. | | | |

The value of the firmness (gr) is the maximum peak force during compression. The springiness (%) gives an indication of the recovery of the sample after the compression for 60 s. The closer the resulting value is to 100%, the more the product behaves as a "spring". The figures given in Table 1 indicate that firmness and springiness of the egg cake and egg-free cake are close to each other over a three days period. The samples were kept in an air-tight bag at room temperature.

### Example 2 - Variation of carbohydrate content of egg-free sponge cake

In this example the carbohydrates of the egg-free sponge cake were varied in the recipe according to example 1. The results are listed in table 2.

At 100% lactose the firmness of the cake showed the highest figures, while the springiness was slightly lower than the other cakes. The sensory evaluation of the 100% lactose cake showed low values in particularly tenderness and overall liking. Further it appeared that this cake had no sticky crust at all. The specific volume of the 100% lactose cake was favourable compared to e.g. 100% dextrose cake.

The lowest level of lactose (33%) showed in the sensory evaluation rather good results. However, the crust of this egg-free sponge cake was very sticky.

At 83% lactose the results of the sensory evaluation stayed behind, but the crust was advantageously not sticky.

Samples with 50% lactose/25% sucrose/ 25% dextrose combined the positive effects of cakes containing 33% and 83% lactose.

### Example 3 - further ingredients

The performance of an egg-free sponge cake containing 50% lactose/25% sucrose/25% dextrose was further improved by adding hydroxypropyl-methylcellulose (Methocel K99 - Brenntag Loosdrecht NL) and milk phospholipids (SM2 - Corman) to the recipe according to the preceding examples.

As expected all crusts were non-sticky. Methocel K99 did increase the firmness, while SM2 improved the tenderness and taste. The combination of SM2 and Methocel K99 gave the best results as shown in Table 3. Further, an egg-free egg flavour was added. The final outcome was in that case close to an egg cake.

**Table 2**

| RECIPE (GR) | | 100% sucrose | 100% dextrose | 100% lactose | 83% lactose 17% sucrose | 33% lactose 33% sucrose 33% dextrose | 50% lactose 25% sucrose 25% dextrose |
|---|---|---|---|---|---|---|---|
| Whippening agent-BV45 | | 30 | 30 | 30 | 30 | 30 | 30 |
| Wheat flour-Albatros | | 162 | 162 | 162 | 162 | 162 | 162 |
| Wheat Starch-Puramyl SP | | 60 | 60 | 60 | 60 | 60 | 60 |
| Sucrose | | 230 | - | - | 40 | 76.7 | 57.5 |
| Dextrose | | - | 230 | - | - | 76.7 | 57.5 |
| Lactose | | - | - | 230 | 190 | 76.7 | 115 |
| Water | | 360 | 360 | 360 | 360 | 360 | 360 |
| Whey protein - Bipro | | 46 | 46 | 46 | 46 | 46 | 46 |
| Baking powder - Karam | | 8 | 8 | 8 | 8 | 8 | 8 |
| MEASUREMENTS | | | | | | | |
| Firmness (gr) | - day 1 | 60 | 48 | 96 | 58 | 49 | 63 |
| | - day 2 | 69 | 58 | 143 | 80 | 61 | 79 |
| | - day 3 | 81 | 67 | 224 | 95 | 67 | 103 |
| Springiness | - day 1 (%) | 52 | 54 | 55 | 55 | 55 | 56 |
| | - day 2 | 57 | 58 | 51 | 55 | 58 | 59 |
| | - day 3 | 57 | 62 | 48 | 55 | 58 | 55 |
| SENSORY EVALUATION | | | | | | | |
| Spongy/mouthfeel | | 3 | 3 | 2 | 2 | 3 | 3 |
| Structure crumb | | 2 | 2 | 3 | 2 | 3 | 3 |
| Tenderness | | 2 | 3 | 1 | 2 | 3 | 2 |
| Taste | | 2 | 3 | 2 | 2 | 3 | 2 |
| Overall liking | | 3 | 3 | 1 | 2 | 3 | 3 |
| STICKINESS CRUST | | 5 | 5 | 1 | 1 | 5 | 1 |
| SPECIFIC VOLUME PER 400 GR BATTER (LITRE) | | 2.08 | 1.97 | 2.13 | 2.24 | 2.16 | 2.21 |

**Table 3**

| RECIPE (GR) | | 50% lactose - 25% sucrose - 25% dextrose | | | |
|---|---|---|---|---|---|
| | | Referent | Methocel K99 | SM2 | SM2* Methocel K99 |
| Whipping agent-BV45 | | 30 | 30 | 30 | 30 |
| Wheat flour -Albatros | | 162 | 162 | 162 | 162 |
| Wheat starch-Puramyl SP | | 60 | 60 | 60 | 60 |
| Sucrose | | 57.5 | 57.5 | 57.5 | 57.5 |
| Dextrose | | 57.5 | 57.5 | 57.5 | 57.5 |
| Lactose | | 115 | 115 | 115 | 115 |
| Water | | 360 | 360 | 360 | 360 |
| Whey protein - Bipro | | 46 | 46 | 46 | 46 |
| Baking powder | | 8 | 8 | 8 | 8 |
| Methocel K99 | | - | 1.5 | - | 1.5 |
| SM2 - Corman | | - | - | 12 | 12 |

| MEASUREMENTS | | | | | |
|---|---|---|---|---|---|
| Firmness | - day 1 (gr) | 60 | 85 | 76 | 62 |
| | - day 2 | 74 | 113 | 90 | 82 |
| | - day 3 | 96 | 131 | 107 | 93 |
| Springiness | - day 1 (%) | 58 | 58 | 57 | 53 |
| | - day 2 | 60 | 55 | 58 | 59 |
| | - day 3 | 56 | 58 | 59 | 58 |

| SENSORY EVALUATION | | | | | |
|---|---|---|---|---|---|
| Spongy/mouthfeel | | 3 | 3 | 3 | 3 |
| Structure crumb | | 3 | 3 | 3 | 4 |
| Tenderness | | 2 | 2 | 3 | 3 |
| Taste | | 2 | 2 | 3 | 4 |
| Overall liking | | 3 | 3 | 3 | 4 |
| STICKINESS CRUST | | 1 | 1 | 1 | 1 |
| SPECIFIC VOLUME PER 400 GR BATTER (litre) | | 2.21 | 2.17 | 2.06 | 2.17 |

| | | | | | |
|---|---|---|---|---|---|
| * Addition of 27 gr. egg flavour (Egg extra, Firmenich, Kerpen DE) resulted in the following sensory evaluation: 3,4,4,5,5,1, in the order addressed in the table. | | | | | |

## Claims

1. A substantially egg-free batter mix formulation comprising non-egg heat-coagulatable globular proteins and wherein the sugar content comprises 25 - 90 wt% lactose.

2. The batter mix formulation according to claim 1, wherein said sugar content comprises 50 - 90 wt% of lactose and dextrose.

3. The batter mix formulation according to claim 2, wherein the weight ratio of lactose:dextrose is at least 1:1.

4. The batter mix formulation according to any one of the preceding claims, comprising less than 0.1 wt% egg ingredients or ingredients associated with egg.

5. The batter mix formulation according to any one of the preceding claims, wherein said non-egg heat-coagulatable globular proteins are whey proteins.

6. The batter mix formulation according to any one of the preceding claims, being a mix formulation for foamed cake, preferably a sponge cake.

7. The batter mix formulation according to any one of the preceding claims, further containing milk phospholipids and hydroxypropylmethylcellulose.

8. A method for preparing the substantially egg-free batter mix formulation according to any one of the preceding claims, comprising mixing flour, baking powder, sugar, water, heat-coagulatable globular proteins other than egg proteins, wherein said sugar comprises 25 - 90 wt% lactose.

9. The method according to claim 8, wherein less than 10 % egg ingredients or ingredients associated with egg are present.

10. The method according to claim 8 or 9, wherein lactose is provided to the mixture in its dissolved form.

11. A substantially egg-free bakery product comprising non-egg heat-coagulated globular proteins and wherein the sugar content comprises 25 - 90 wt% lactose.

12. The bakery product according to claim 11, wherein said sugar content comprises 50 - 90 wt% of lactose and dextrose.

13. The bakery product according to claim 11 or 12, being a foamed cake, preferably a sponge cake.

14. A method for preparing a bakery product according to claim 11 or 12, comprising baking a batter mix formulation according to any one of claims 1-7, wherein the baking temperature is in the range of 140 - 160 °C.
